# FASCICULE DE BREVET EUROPEEN

(11) **EP 1 287 717 B1**
(45) Date de publication et mention de la délivrance du brevet: **26.09.2007**
(21) Numéro de dépôt: 01936585.7
(22) Date de dépôt: 18.05.2001
(51) Int. Cl.: H04Q 7/38

(54) **PROCEDE POUR LE SUIVI DE COMMUNICATIONS DANS UN SYSTEME DE RADIOCOMMUNICATION CELLULAIRE, ET COEUR DE RESEAU METTANT EN OEUVRE CE PROCEDE**
VERFAHREN ZUR VERFOLGUNG EINER KOMMUNIKATION IN EINEM ZELLULAREN KOMMUNIKATIONSFUNK-NETZ UND EIN KERNNETZ ZUR DURCHFÜHRUNG DES VERFAHREN
METHOD FOR MONITORING COMMUNICATIONS IN A CELLULAR RADIOCOMMUNICATION SYSTEM, AND NETWORK CORE THEREFOR

(30) Priorité: 06.06.2000 FR 0007255
(43) Date de publication de la demande: 05.03.2003
(73) Titulaire: Nortel Networks Limited, St Laurent, Québec H4S 2A9 (CA)
(72) Inventeur: LUCIDARME, Thierry, F-78180 Montigny le Bretonneux (FR); DUPLESSIS, Philippe, F-92700 Colombes (FR)
(74) Mandataire: Loisel, Bertrand
(86) Numéro de dépôt international: PCT/FR2001/001538
(87) Numéro de publication internationale: WO 2001/095657

(56) Documents cités:
- EP-A- 0 766 427

## Description

La présente invention concerne la gestion des réseaux cellulaires de radiocommunication.

Dans les systèmes de télécommunication classiques, constitués d'un ensemble de réseaux interconnectés, chacun de ces réseaux étant géré par un seul opérateur, chaque réseau recueille de l'information sur chaque fourniture de service à un abonné, afin de calculer des données de facturation. Les informations recueillies sont ensuite triées sur la base de l'identité de l'abonné, afin de débiter les abonnés ou des organisations chargées de débiter un sous-ensemble d'abonnés:

Les systèmes sans fil sont des exemples de tels systèmes de réseaux interconnectés. Une particularité est que dans certaines conditions, un abonné d'un réseau peut occasionnellement utiliser les ressources d'un autre réseau. C'est ce qu'on appelle l'itinérance (« roaming »).

Si on considère un abonné d'un réseau A qui se trouve sous la couverture d'un autre réseau B et effectue un appel ou tout autre transaction de télécommunication facturable, le réseau B enregistre de l'information sur cette transaction avec une identification de l'abonné qui indique notamment quel est son réseau de rattachement. Le réseau B trie ces enregistrements sur la base des identités d'abonnés, et il construit un fichier pour le réseau A, qui inclut notamment l'enregistrement concernant l'abonné itinérant constitué.

Si les réseaux interconnectés A et B font mutuellement appel à leurs ressources pour acheminer le trafic, chaque réseau enregistre des données décrivant le trafic vers l'autre réseau, et une facturation croisée est effectuée en comparant les trafics échangés sans faire référence aux identités d'abonnés. Cette situation est typiquement celle du trafic téléphonique international.

Cette situation est également celle de l'interfonctionnement d'un réseau privé avec un réseau public. L'opérateur public mesure le trafic échangé au niveau d'une passerelle entre les deux réseaux, et facture l'opérateur privé sur cette base.

Si le réseau B appartient à une couche hiérarchiquement plus élevée que le réseau A (par exemple A correspond à une compagnie téléphonique régionale, et B à l'opérateur national), le réseau A utilise les ressources du réseau B pour acheminer ces communications. L'opérateur du réseau A doit alors payer les services d'acheminement fournis par le réseau B.

Dans le domaine des réseaux de radiocommunication cellulaires, l'ETSI (« European Telecommunications Standard Institute ») a proposé d'interconnecter les réseaux cellulaires à couverture étendue (PLMN) (« Public Land Mobile Network ») avec des réseaux d'accès radio à large bande (BRAN, « Broadband Radio Access Network »).

Le BRAN est typiquement un réseau local sans fil (WLAN, « Wireless Local Area Network ») qui peut être de type HiperLAN/1 ou HiperLAN/2 selon les normes de l'ETSI. Ces réseaux HiperLAN sont de courte portée, et fonctionnent dans des bandes de fréquence autour de 2,4 ou 5,2 GHz. L'ETSI préconise des protocoles de convergence au-dessus des protocoles HiperLAN/2, afin de permettre le raccordement de ces WLAN avec des réseaux plus étendus, en particulier des réseaux cellulaires.

L'objectif est de faire profiter les abonnés du WLAN des services offerts par le réseau cellulaire.

Aux Etats-Unis, il existe des normes de WLAN similaires, à savoir les normes IEEE 802.11b et IEEE 802.11a.

EP-A-0 766 427 décrit un système combinant un coeur de réseau (MSC) relié d'une part à un réseau d'accès de type cellulaire (BSS/BS), et d'autre part à un LAN équipé de bornes radio telles que des bases DECT. Ce document n'évoque pas la possibilité de générer un message de compte rendu incluant une identification du réseau d'accès utilisé dans une communication avec une station mobile déterminée.

Un but de la présente invention est d'organiser l'interfonctionnement entre un réseau cellulaire et des WLAN de telle sorte que des abonnés du réseau cellulaire puissent utiliser les ressources à large bande du WLAN.

L'invention propose ainsi un procédé pour le suivi de communications dans un système de radiocommunication cellulaire comportant d'une part un coeur de réseau comprenant des commutateurs, au moins une passerelle vers un réseau externe, des moyens de gestion d'abonnés et des moyens de gestion de facturation, et d'autre part plusieurs réseaux d'accès radio reliés aux commutateurs du coeur de réseau et comprenant chacun des stations de base capables de communiquer par radio avec des stations mobiles. Les réseaux d'accès radio incluent un premier réseau d'accès géré avec le coeur de réseau par un opérateur cellulaire et au moins un second réseau d'accès ayant une couverture radio sensiblement moins étendue et une bande passante sensiblement plus large que le premier réseau d'accès. Lors d'une communication avec une station mobile à travers le coeur de réseau et l'un des réseaux d'accès, on génère au moins un message de compte rendu incluant une identification dudit réseau d'accès indépendante des identités attachées à la station mobile.

Ainsi, un utilisateur enregistré dans le réseau géré par l'opérateur cellulaire peut utiliser les ressources du second réseau d'accès de type BRAN pour bénéficier du spectre très large offert par le BRAN et accéder ainsi aux services à large bande offerts par les réseaux externes (par exemple IP) raccordés au coeur de réseau. Ceci permet d'augmenter la capacité d'accès public au réseau cellulaire.

Le gestionnaire du BRAN peut se faire rémunérer par l'opérateur cellulaire pour le service d'accès qu'il fournit. Ceci est effectué simplement en enrichissant les messages de compte rendu circulant dans le coeur de réseau. Diverses méthodes de gestion peuvent ensuite s'appliquer entre l'opérateur cellulaire et le gestionnaire du BRAN afin de rémunérer ce dernier. Cette rémunération peut permettre de financer le coût d'installation du BRAN.

Un autre aspect de la présente invention se rapporte à un coeur de réseau d'un système de radiocommunication cellulaire comportant comprenant des commutateurs, au moins une passerelle vers un réseau externe, des moyens de gestion d'abonnés et des moyens de gestion de facturation, les commutateurs étant reliés à plusieurs réseaux d'accès radio comprenant chacun des stations de base capables de communiquer par radio avec des stations mobiles, les réseaux d'accès radio incluant un premier réseau d'accès géré avec le coeur de réseau par un opérateur cellulaire et au moins un second réseau d'accès ayant une couverture radio sensiblement moins étendue et une bande passante sensiblement plus large que le premier réseau d'accès, le coeur de réseau comportant des moyens pour générer au moins un message de compte rendu lors d'une communication avec une station mobile à travers le coeur de réseau et l'un des réseaux d'accès, lequel réseau d'accès est identifié dans le message de compte rendu de manière indépendante des identités attachées à la station mobile.

D'autres particularités et avantages de la présente invention apparaîtront dans la description ci-après d'exemples de réalisation non limitatifs, en référence aux dessins annexés, dans lesquels :
- la figure 1 est un schéma général d'une architecture de système de radiocommunication cellulaire à laquelle l'invention peut s'appliquer ;
- les figures 2 et 3 sont des schémas illustrant des piles de protocoles de communication mis en oeuvre dans des entités du système de la figure 1.

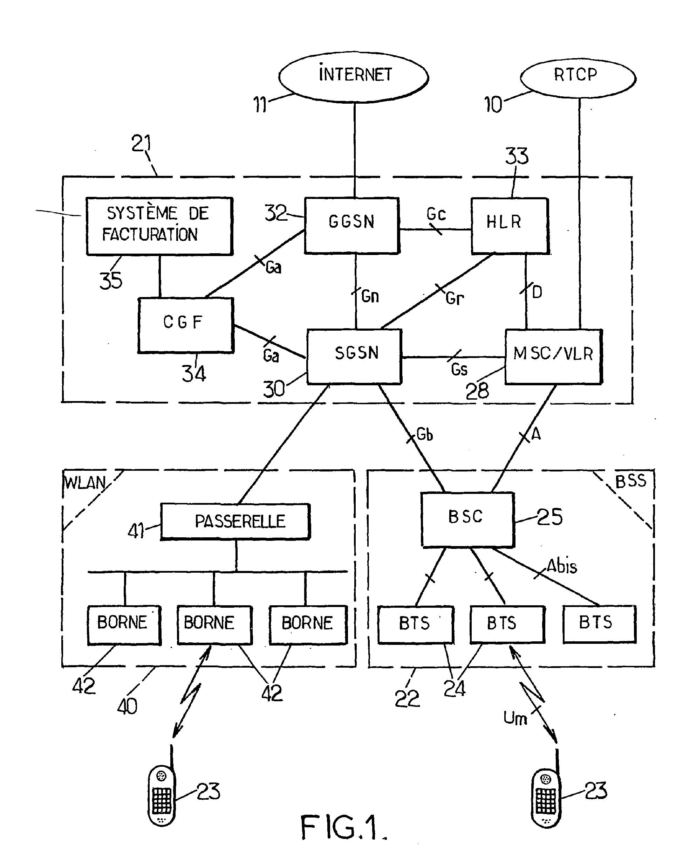

Le système de radiocommunication cellulaire représenté sur la figure 1 comporte un réseau cellulaire à couverture étendue, par exemple nationale, géré par un opérateur grand public.

Ce PLMN est classiquement divisé en un coeur de réseau 21, comprenant des commutateurs interconnectés, et un réseau d'accès 22 fournissant les liens radio avec les terminaux mobiles 23.

Dans l'exemple représenté, le PLMN est de seconde génération et de type GSM (« Global System for Mobile communications »). Il incorpore un service de transmission de paquets de type GPRS (« General Packet Radio Service »). Dans le GSM, le réseau d'accès 22, appelé BSS (« Base Station Sub-system »), se compose de stations de base (BTS) 24 distribuées sur la zone de couverture du réseau pour communiquer par radio (interface Um) avec les terminaux mobiles 23, et de contrôleurs de stations de base (BSC) 25 reliés au coeur de réseau 21 et supervisant chacun des stations de base 24 à travers des interfaces appelées Abis.

Bien entendu, l'invention est applicable à d'autres types de PLMN, notamment à des réseaux de troisième génération du type UMTS (« Universal Mobile Telecommunications System »).

Le coeur de réseau 21 est relié à des réseaux fixes comportant un réseau téléphonique commuté public (RTCP) 10 et un ou plusieurs réseaux de transmission de paquets utilisant des protocoles respectifs (PDP, « Packet Data Protocol ») tels que X.25 ou IP (« Internet Protocol »). Dans l'exemple illustré par les dessins, il y a un réseau de transmission de paquets 11 constitué par le réseau Internet.

Le coeur de réseau 21 comporte des centres de commutation du service mobile 28 (MSC, « Mobile Switching Center »), associés à des registres de localisation des visiteurs (VLR, « Visitor Location Register »). Ces MSC 28 assurent la commutation de circuit pour les communications de téléphonie ou de transfert de données en mode circuit. Certains MSC servent de passerelle avec les réseaux fixes, notamment avec le réseau commuté 10. Chaque BSC 25 est relié à un ou plusieurs MSC 28 par une interface A.

Pour le mode paquets, les commutateurs du coeur de réseau 21 sont appelés GSN (« GPRS Support Node »), et ils communiquent entre eux à travers une interface appelée Gn.

Les commutateurs de paquets 30 reliés aux BSC 25 du réseau d'accès 22 par une interface Gb sont appelés SGSN (« Serving GSN »). Certains d'entre eux peuvent communiquer avec des MSC par une interface Gs pour coordonner la mobilité entre les modes circuit et paquets.

D'autres commutateurs de paquets 32 du coeur de réseau 21, appelés GGSN (« Gateway GSN »), servent de passerelle avec les réseaux de paquets, notamment avec le réseau Internet 11. Ces passerelles 32 sont reliées aux SGSN 30 pour permettre aux terminaux mobiles 23 d'accéder à l'Internet.

Le coeur de réseau 21 comporte un registre de localisation nominal 33 (HLR, « Home Location Register ») communiquant avec les MSC/VLR, SGSN et GGSN à travers des interfaces normalisées respectivement appelées D, Gc et Gr. Le HLR est une base de données, située en un ou plusieurs endroits, contenant toutes les données propres aux abonnés du PLMN, notamment leurs paramètres d'abonnement, de mobilité et leurs contextes, afin de permettre le traitement de toutes les requêtes de services concernant ces abonnés. Le coeur de réseau 21 peut encore comporter d'autres unités non représentées sur la figure 1 : serveurs de messages courts (SMS), registres de terminaux (EIR), ...

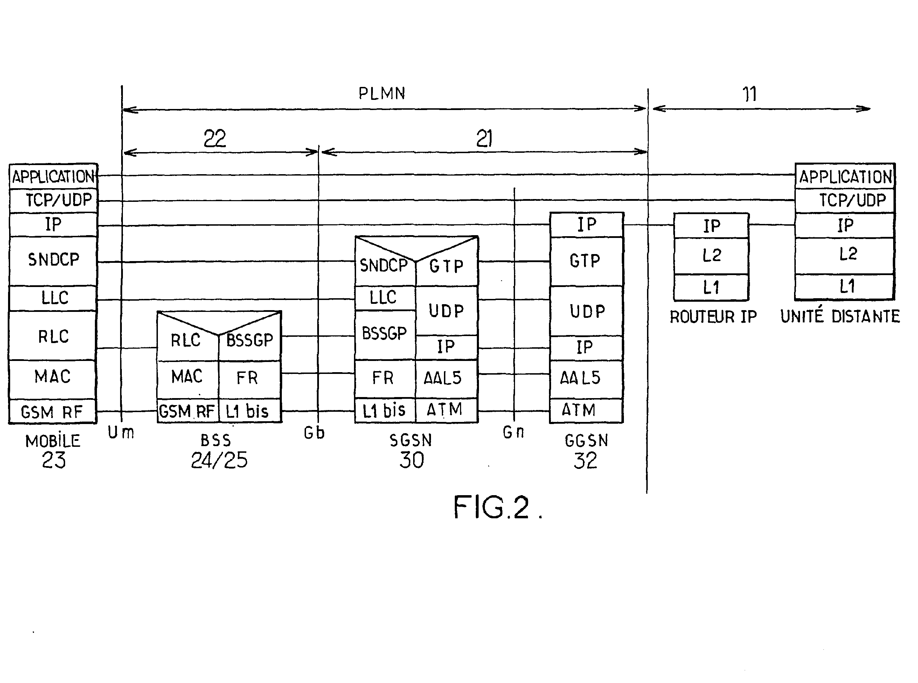

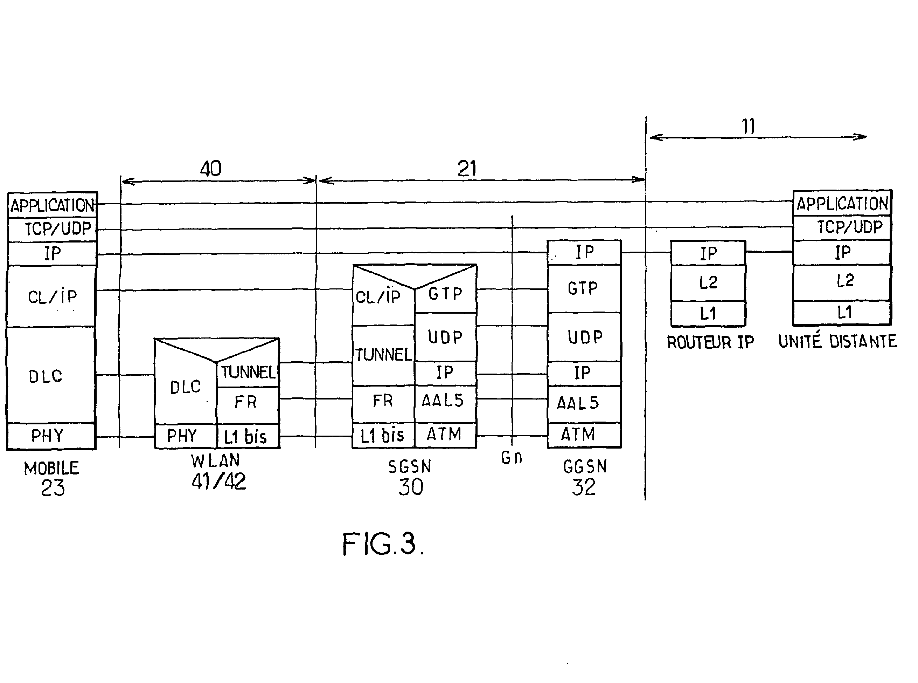

Les figures 2 et 3 sont des illustrations des protocoles pouvant être mis en oeuvre dans des communications en mode paquets entre un terminal mobile 23 et une unité distante telle qu'un serveur IP ou un terminal d'usager accessible à travers un ou plusieurs routeurs IP appartenant au réseau Internet. Dans le réseau Internet 12, au-dessus des couches 1 et 2 du modèle OSI (L1, L2), IP est utilisé comme protocole de réseau. Une couche IP correspondante est présente dans les terminaux mobiles 23 lorsqu'ils accèdent à l'Internet. Cet accès peut se faire lors de sessions TCP (« Transmission Control Protocol »), ou par échange de datagrammes UDP (« User Datagram Protocol »), pour permettre aux applications exécutées dans le mobile 23 et l'unité distante d'échanger les données.

Les protocoles GPRS utilisés dans le PLMN sont décrits dans les Recommandations GSM 03.60, 03.64, 08.16 et 09.61 publiées par l'ETSI (« European Telecommunications Standards Institute »). Au niveau de l'interface Gn, des couches IP et UDP supplémentaires, ainsi qu'une couche du protocole GTP (« GPRS Tunnelling Protocol », voir spécification technique 3G TS 29.060, version 3.4.0 publiée en mars 2000 par le 3GPP (3^{rd} Generation Partnership Project)), sont présentes entre la couche 2 et la couche IP correspondant à celle du terminal mobile 23. Cette interface Gn peut être portée par des connexions ATM (« Asynchronous Transfer Mode »), avec une couche 2 de type AAL5.

Les datagrammes IP échangés par le terminal mobile 23 sont encapsulés dans des unités de données du protocole SNDCP (« Sub-Network Dependent Convergence Protocol ») qui est au-dessus du protocole LLC (« Link Layer Control ») gérant l'adressage dans les paquets transmis sur l'interface radio. Le SGSN fait le relais entre les protocoles GTP et SNDCP pour transmettre ces datagrammes dans le coeur de réseau et vers le BSS.

Le BSS 22 utilise le protocole BSSGP (« BSS Gateway Protocol ») sur l'interface Gb, au-dessous de la couche LLC à laquelle il est transparent. Cette interface Gb peut utiliser la technique du relais de trames (FR, « Frame Relay »). Sur l'interface Um, les protocoles radio du GSM sont employés dans la couche 1, et des protocoles MAC (« Medium Access Control ») et RLC (« Radio Link Control ») dans la couche 2.

L'invention se rapporte à la fourniture de données utiles aux méthodes de facturation mises en oeuvre dans le coeur de réseau. Dans la suite de la présente description, elle est présentée dans son application aux transmissions de données en mode paquets (GPRS), sans que ceci soit limitatif.

En plus des éléments précédemment indiqués, le coeur de réseau 21 comporte une ou plusieurs entités 34 appelées CGF (« Charging Gateway Function ») intervenant dans les fonctions de facturation dans le réseau GPRS. Sur ce sujet, on pourra se reporter à la spécification technique 3G TS 32.015, version 3.1.1 publiée en mars 2000 par le 3GPP. L'interface normalisée entre les GSN et le CGF est appelée Ga. Une entité CGF 34 peut être incorporée à un GGSN ou SGSN, ou former une unité à part. Il est relié au système de facturation 35 utilisé par l'opérateur du PLMN.

La facturation est basée sur des messages de compte rendu appelés CDR (« Call Detail Report ») issus des GSN, collectés en temps réel par le CGF et fournis au système de facturation par le CGF après des prétraitements éventuels. Sur la base de ces CDR, l'opérateur du PLMN contrôle la facturation pour ses abonnés et les opérateurs extérieurs, selon les méthodes de gestion qui lui sont propres.

Un message dit S-CDR est ouvert dans le SGSN à l'activation de chaque contexte du PDP concernant un terminal 23. Des informations sont ajoutées au S-CDR lorsqu'il se produit certains événements tels que modification de la qualité de service ou changement de tranche horaire de tarification. Le S-CDR est fermé et délivré au CGF lorsque le contexte PDP est terminé dans le SGSN pour l'abonné. Ce message horodaté indique l'identité de l'abonné (IMSI, « International Mobile Subscriber Identity») et contient notamment les données suivantes recueillies par le SGSN :
- quantités de données transmises sur l'interface radio depuis et vers le terminal, en indiquant les qualités de service et les protocoles d'utilisateur ;
- utilisation des ressources GPRS, notamment quant à la mobilité du terminal ;
- durée d'utilisation des adresses du PDP ;
- indication du PLMN de rattachement du terminal et du PLMN visité en cas de mobilité inter-PLMN (« roaming »), et éventuellement localisation plus précise de l'abonné au moment de la création du S-CDR.

Le SGSN peut produire un autre message dit M-CDR pour intégrer les données liées aux protocoles de gestion de la mobilité.

Le GGSN desservant le terminal peut notamment recueillir les informations suivantes qu'il insère de même dans un message G-CDR adressé au CGF :
- adresses source et destination ;
- utilisation des réseaux de données externes ;
- durée d'utilisation des adresses du PDP.

Le CGF 34 enregistre les messages S-CDR, M-CDR et G-CDR délivrés par les GSN, et il peut éventuellement effectuer certaines opérations : filtrage, fusion, prétraitements en vue de la facturation... Il transfère les données des CDR au système de facturation 35 qui assure les traitements comptables.

Dans le système représenté sur la figure 1, un ou plusieurs réseaux locaux sans fil (WLAN) sont raccordés à un ou plusieurs SGSN 30 du coeur de réseau 21.

Le WLAN 40 offre une bande passante très supérieure à celle offerte par le BSS 22. Mais c'est un réseau local à courte portée, alors que le BSS est un réseau étendu, par exemple de couverture nationale.

A titre d'exemple, le WLAN 40 peut être de type HiperLAN/2. Il comporte une passerelle 41 reliée au SGSN 30 et un ensemble de bornes 42 réparties dans la zone couverte par le WLAN, qui correspond typiquement à un ou plusieurs bâtiments.

Des terminaux mobiles 23 détenus par des abonnés du PLMN 21, 22 (ou d'un autre PLMN avec lequel existent des accords de roaming) peuvent, s'ils sont multimodes, communiquer également par l'intermédiaire du WLAN 40. Un terminal multimode incorpore les protocoles de communication utilisés dans le réseau cellulaire (figure 2), et également ceux utilisés dans le WLAN. Bien entendu, un abonné peu également détenir plusieurs terminaux compatibles avec différents réseaux d'accès radio.

La figure 3 illustre différents protocoles pouvant intervenir dans un échange de données entre le réseau Internet 11 et un terminal mobile multimode 23 à travers le WLAN 40. Ces protocoles sont en grande partie identiques à ceux de la figure 2. Dans l'exemple représenté, l'interface entre le coeur de réseau 21 et le WLAN 40 est également de type relais de trames (FR), avec un protocole tunnel fonctionnellement similaire à BSSGP pour porter les unités de données du protocole de la couche de convergence entre les protocoles HiperLAN/2 et IP (CL, « Convergence Layer»). Le SGSN 30 effectue les traductions nécessaires pour transmettre les paquets IP de façon transparente selon le protocole GTP dans le coeur de réseau et selon le protocole CL vers le réseau d'accès.

Le système HiperLAN/2 considéré à titre d'exemple pour le fonctionnement du WLAN 40 utilise une couche physique (PHY) reposant sur la technique OFDM (« Orthogonal Frequency Division Multiplexing »). Le WLAN 40 et le terminal mobile 23 incorporent également une couche de niveau 2 dite DLC (« Data Link Control ») incorporant des sous-couches de type MAC et RLC. Les unités de données du protocole de convergence sont transmises de façon transparente par le WLAN 40, sous forme encapsulée dans des unités de données du protocole DLC sur l'interface radio, et au moyen du protocole tunnel sur l'interface avec le coeur de réseau 21.

Lorsqu'un terminal mobile communique de la sorte en utilisant les ressources d'accès radio du WLAN 40, le SGSN 30 insère dans le message S-CDR une identification du réseau d'accès utilisé, qu'il peut déduire simplement du port physique utilisé pour la communication vers le mobile. Lorsque l'accès est effectué au moyen du BSS géré par l'opérateur cellulaire, le SGSN peut inclure une indication de même nature dans le S-CDR, ou le BSS peut être considéré comme le réseau d'accès par défaut.

Sur la base de ces indications du réseau d'accès employé, le système de facturation 35 fait établir une comptabilité des appels effectués par l'intermédiaire du WLAN 40, par exemple en vue d'une réversion de l'opérateur cellulaire vers le gestionnaire du WLAN.

Le gestionnaire du WLAN joue ainsi un rôle d'opérateur alternatif.

Un même WLAN peut éventuellement être associé de cette manière à plusieurs coeurs de réseau gérés par des opérateurs distincts.

Pour l'identification du réseau d'accès dans le message CDR, on peut prévoir un champ spécifique réservé à cette fin. Sinon, on peut utiliser des champs déjà prévus dans la norme, par exemple le champ « cell identity » prévu dans la section 6.1.1. de la spécification 3G TS 32.015 précitée.

On peut également prévoir que la passerelle 41 du WLAN soit adaptée pour mesurer le trafic échangé avec le SGSN 30, afin d'effectuer une comptabilité locale et/ou de fournir les informations requises pour l'établissement du CDR dans le coeur de réseau 21.

## Revendications

1. Procédé pour le suivi de communications dans un système de radiocommunication cellulaire comportant d'une part un coeur de réseau (21) comprenant des commutateurs (28, 30, 32), au moins une passerelle (28, 32) vers un réseau externe (10, 11), des moyens de gestion d'abonnés (33) et des moyens de gestion de facturation (34, 35), et d'autre part plusieurs réseaux d'accès radio (22, 40) reliés aux commutateurs du coeur de réseau et comprenant chacun des stations de base (24, 42) capables de communiquer par radio avec des stations mobiles (23), dans lequel les réseaux d'accès radio incluent un premier réseau d'accès (22) géré avec le coeur de réseau (21) par un opérateur cellulaire et au moins un second réseau d'accès (40) ayant une couverture radio sensiblement moins étendue et une bande passante sensiblement plus large que le premier réseau d'accès, et dans lequel, lors d'une communication avec une station mobile à travers le coeur de réseau et l'un des réseaux d'accès, on génère au moins un message de compte rendu incluant une identification dudit réseau d'accès indépendante des identités attachées à la station mobile.

2. Procédé selon la revendication 1, dans lequel ledit message de compte rendu est généré dans un commutateur (30) du coeur de réseau (21) et transmis aux moyens de gestion de facturation (34, 35).

3. Procédé selon la revendication 1 ou 2, dans lequel les premier et second réseaux d'accès (22, 40) fonctionnent dans des bandes de fréquence différentes.

4. Procédé selon l'une quelconque des revendications 1 à 3, dans lequel le second réseau d'accès (40) est un réseau local sans fil utilisé pour fournir en outre des liens de communication indépendants du coeur de réseau (21).

5. Coeur de réseau d'un système de radiocommunication cellulaire comportant comprenant des commutateurs (28, 30, 32), au moins une passerelle (28, 32) vers un réseau externe, des moyens de gestion d'abonnés (33) et des moyens de gestion de facturation (34, 35), les commutateurs étant reliés à plusieurs réseaux d'accès radio (22, 40) comprenant chacun des stations de base (24, 42) capables de communiquer par radio avec des stations mobiles (23), les réseaux d'accès radio incluant un premier réseau d'accès (22) géré avec le coeur de réseau (21) par un opérateur cellulaire et au moins un second réseau d'accès (40) ayant une couverture radio sensiblement moins étendue et une bande passante sensiblement plus large que le premier réseau d'accès, le coeur de réseau (21) comportant des moyens pour générer au moins un message de compte rendu lors d'une communication avec une station mobile à travers le coeur de réseau et l'un des réseaux d'accès, lequel réseau d'accès est identifié dans le message de compte rendu de manière indépendante des identités attachées à la station mobile.

6. Coeur de réseau selon la revendication 5, dans lequel les moyens pour générer les messages de compte rendu sont situés dans des commutateurs (30) qui transmettent lesdits messages aux moyens de gestion de facturation (34, 35).

## Claims

1. Method for monitoring communications in a cellular radiocommunication system comprising a core network (21) including switches (28, 30, 32), at least one gateway (28, 32) to an external network (10, 11), subscriber management means (33) and billing management means (34, 35), as well as a plurality of radio access networks (22, 40) connected to the core network switches, each including base stations (24, 42) capable of radio communication with mobile stations (23), wherein the radio access networks include a first access network (22) managed with the core network (21) by a cellular operator and at least one second access network (40) having a substantially less extensive radio coverage and a substantially wider bandwidth than the first access network, and wherein during a communication with a mobile station through the core network and one of the access networks, at least one report message is generated including an identification of said access network independent of the identities associated with the mobile station.

2. Method according to claim 1, wherein said report message is generated within a switch (30) of the core network (21) and transmitted to the billing management means (34, 35).

3. Method according to claim 1 or 2, wherein the first and second access networks (22, 40) operate in different frequency bands.

4. Method according to any one of claims 1 to 3, wherein the second access network (40) is a wireless local area network used for further supplying communication links independent of the core network (21).

5. Core network for a cellular radiocommunication system, comprising switches (28, 30, 32), at least one gateway (28, 32) to an external network, subscriber management means (33) and billing management means (34, 35), the switches being connected to a plurality of radio access networks (22, 40), each including base stations (24, 42) capable of radio communication with mobile stations (23), the radio access networks including a first access network (22) managed with the core network (21) by a cellular operator and at least a second access network (40) having a substantially less extensive radio coverage and a substantially wider bandwidth than the first access network, the core network (21) comprising means for generating at least one report message during a communication with a mobile station through the core network and one of the access networks, which access network is identified in the report message independently of the identities associated with the mobile station.

6. Core network according to claim 5, wherein the means for generating the report messages are located in switches (30) that transmit said messages to the billing management means (34, 35).

## Patentansprüche

1. Verfahren zur Verfolgung einer Kommunikation in einem zellularen Kommunikationsfunknetz, umfassend einerseits ein Kernnetz (21) mit Schaltern (28, 30, 32), mindestens einem Router (28, 32) zu einem externen Netz (10, 11), Mitteln zur Verwaltung der Teilnehmer (33) und Mitteln zur Verwaltung der Berechnung (34, 35) und andererseits mehrere Funkzugangsnetze (22, 40), die mit den Schaltern des Kernnetzes verbunden sind und jeweils Basisstationen (24, 42) umfassen, die in der Lage sind, über Funk mit Mobilstationen (23) zu kommunizieren, bei dem die Funkzugangsnetze ein erstes Zugangsnetz (22), das zusammen mit dem Kernnetz (21) von einem Mobilfunkbetreiber verwaltet wird, und mindestens ein zweites Zugangsnetz (40), welches eine wesentlich geringere Funkreichweite und eine wesentlich größere Bandbreite als das erste Zugangsnetz hat, beinhalten, und bei dem, bei einer Verbindung mit einer Mobilstation über das Kernnetz und eines der Zugangsnetze, mindestens eine Protokollnachricht erzeugt wird, welche eine Identifikation des Zugangsnetzes beinhaltet, die unabhängig ist von den mit der Mobilstation verbundenen Identitäten.

2. Verfahren nach Anspruch 1, bei dem die Protokollnachricht in einem Schalter (30) des Kernnetzes (21) erzeugt wird und an die Mittel zur Verwaltung der Berechnung (34, 35) weitergeleitet wird.

3. Verfahren nach Anspruch 1 oder 2, bei dem das erste und das zweite Zugangsnetz (22, 40) in unterschiedlichen Frequenzbändern betrieben werden.

4. Verfahren nach einem der Ansprüche 1 bis 3, bei dem das zweite Zugangsnetz (40) ein drahtloses lokales Netz ist, das verwendet wird, um darüber hinaus Nachrichtenverbindungen zu schaffen, die von dem Kernnetz (21) unabhängig sind.

5. Kernnetz eines zellularen Kommunikationsfunknetzes, umfassend Schalter (28, 30, 32), mindestens einen Router (28, 32) zu einem externen Netz, Mittel zur Verwaltung der Teilnehmer (33) und Mittel zur Verwaltung der Berechnung (34, 35), wobei die Schalter mit mehreren Funkzugangsnetzen (22, 40) verbunden sind, welche jeweils Basisstationen (24, 42) umfassen, die in der Lage sind, über Funk mit Mobilstationen (23) zu kommunizieren, wobei die Funkzugangsnetze ein erstes Zugangsnetz (22), das zusammen mit dem Kernnetz (21) von einem Mobilfunkbetreiber verwaltet wird, und mindestens ein zweites Zugangsnetz (40), welches eine wesentlich geringere Funkreichweite und eine wesentlich größere Bandbreite als das erste Zugangsnetz hat, beinhalten, wobei das Kernnetz (21) Mittel umfasst, um bei einer Verbindung mit einer Mobilstation über das Kernnetz und eines der Zugangsnetze mindestens eine Protokollnachricht zu erzeugen, wobei dieses Zugangsnetz in der Protokollnachricht unabhängig von den mit der Mobilstation verbundenen Identitäten identifiziert wird.

6. Kernnetz nach Anspruch 5, bei dem die Mittel zur Erzeugung von Protokollnachrichten in Schaltern (30) sitzen, die die Nachrichten anhand der Mittel zur Verwaltung der Berechnung (34, 35) weiterleiten.
